# EUROPEAN PATENT APPLICATION

(11) **EP 3 461 332 A1**
(43) Date of publication of application: **03.04.2019**
(21) Application number: 18195814.1
(22) Date of filing: 20.09.2018
(51) Int. Cl.: A01M 1/14, A01M 1/02, A01M 1/16

(54) **INSECT MONITORING TRAP**

(30) Priority: 29.09.2017 PL 42301717
(71) Applicant: Pankowski, Bartlomiej, 05-500 Mysiadlo (PL); Abiotec, 92350 Le Plessis Robinson (FR)
(72) Inventor: Pankowski, Bartlomiej, 05-500 Mysiadlo (PL)
(74) Representative: BRANDPAT Patent and Trademark Attorneys Chlebicka Czyz Galazkiewicz Ziolkowski Professional Partnership

(57) **Abstract**

The invention relates to an insect monitoring trap comprising a housing (1) having therein an energy collector (2) powering a light source (3) emitting light beyond the UV range and a base comprising an adhesive insert (4) having a surface covered with a phosphorescent material (5) which upon excitation emits green light with a peak for a wavelength ranging between 510 and 530 nm, where the light from the light source (3) is emitted in the direction towards the phosphorescent material to excite.

## Description

The present invention relates to a trap for monitoring the presence of insects, preferably nocturnal insects active in darkened spots.

The trap according to the invention allows to monitor the presence of insects, in particular, nocturnal insects in darkened places, especially without access to daylight, as well as in places without access to artificial light, electrical power or with electrical power being temporarily cut off for safety reasons. The invention allows to effectively monitor the presence of insects on the premises of institutions intended to protect the cultural heritage goods, such as museums, archives and libraries, as well as other places where insect monitoring is required, also in places where the use of UV-A light emitting lamps to monitor insects is prohibited.

Monitoring is to be understood as determining the population of pests, their occurrence and movement, through capturing them. In addition to monitoring, the invention allows to limit the population of insects as, unlike the majority of pheromone traps, it attracts imagoes of both sexes.

Until recently, the monitoring of pests whose imagoes are active at night, had been performed using one of a number methods. One of them involves pheromone traps, which, however, are not effective against all significant pests. The common woodworm, *Anobium punctatum* and the house longhorn beetle, *Hylotrupes bajlus,* i.e. insects that cause the biggest damages to the wooden cultural heritage goods, top the list of species not monitored by means of this method. Using pheromone traps carries also a risk related to accumulation of pheromones in the spots in which they are placed, which leads to an undesired effect, much stronger than anticipated, namely, an uncontrolled intensity of attracting insects from outside the perimeter of the monitored object. This is a significant drawback and one of the reasons behind an increasingly restrictive approach to pheromone traps, which are being gradually eliminated from the market or subjected to stricter regulations. For example, pheromone traps are currently admitted for use in the EU without registration only provided that they are applied strictly as intended, that is, solely for monitoring the presence of insects without limiting their population.

Another luring method applied to monitor harmful nocturnal insects are UV-A lamps and green light emitting lamps. UV-A lamps are usually strong sources of a light similar to daylight. Consequently, they are highly effective in terms of luring diurnal insects at night, as well as some nocturnal insects, especially butterflies. However, a significant number of nocturnal beetles navigate using small sources of light, similar to natural ones, such as the Moon, stars, the light emitted by other beetles, light emitted by fungi growing on substrates such as wood. Beetles thus avoid strong sources of light, such as lamps, and choose less intensive light sources. It should be pointed out that due to their high energy efficiency and the necessity to use power from a power grid, application of UV-A lamps is prohibited in cultural heritage protection institutions, such as museums and libraries.

Instead, in many places where the most valuable cultural heritage artefacts are kept, lamps emitting a harmless, green light are desirable. However, in those places access to electrical power when the employees are not there is limited or cut off altogether, as a result of which green light emitting lamps can't be used there. In many countries, for example in Scandinavia, no lamps are allowed in cultural heritage protection institutions. Therefore, there is a need to create a luring trap monitoring nocturnal insects, not requiring continuous power supply and emitting an environmentally safe light of appropriate intensity.

Patent specification US6108965 (A) discloses a light trap for capturing insects, which combines a luring light and an adhesive surface to which insects stick. The trap comprises a base, an insert for capturing insects, removably attached to the base, a screen, a light source and housing cover. The trap has a light source in the form of at least one fluorescent lamp emitting ultraviolet light placed above the screen to lure insects. The casing is made of a light, semi-transparent or non-transparent plastic with a rough inner surface, which allows the ultraviolet light from the trap to penetrate through the casing to lure insects. This solution requires a permanent power supply to power the lamp and emit ultraviolet light luring insects.

Patent specification US5301456 (A) discloses a portable light trap for capturing flying or crawling insects. In the centre of the trap is placed a fluorescent lamp which attracts insects. Transparent baffles radiating outwardly from the lamp act as walls and an insect hitting a baffle is stunned and drops downwardly, through a funnel opening into an entrapment container therebelow. The lamp of the trap and the photocell placed on the housing are powered by an electric control system. A photocell is used to activate the trap at dusk and allows it to function for a few hours each night.

Utility model no. CN2862701 describes an insect trap comprising solar panels placed on its surface collecting solar energy into a collector providing power to a luminescent element emitting light of different wavelengths using the energy collected.

The invention solves the problem of the inconveniences of the solutions known from the art by proposing a trap free of the said disadvantages, made of incombustible materials, having an autonomous, safe, low-power source, a trap emitting safe light with a characteristic curve with a peak within a wavelength range of app. 520, most intensively attracting insects, especially nocturnal beetles.

The insect monitoring trap according to the invention is comprised of a housing including a light source powered by an energy collector, and a base comprising an adhesive insert having a surface covered with a phosphorescent material. The light source illuminates the phosphorescent surface so that it emits green light with a peak within a wavelength range of 510-530 nm, preferably 520 nm.

Preferably, the phosphorescent material is illuminated from the light source in an intermittent manner controlled by a properly programmed electronic circuit.

In a preferable embodiment, when fully charged (excited), the phosphorescent material is capable of emitting light for over 24 hours.

Preferably, the trap is equipped with a light sensor which switches the light source off when the trap is placed in a spot illuminated by an external light source.

Preferably, the trap comprises a temperature sensor, which disconnects the power supply when the circuitry exceeds the safe temperature level.

Preferably, the adhesive insert is replaceable.

The trap can be used for capturing the following beetle species: the bread beetle (*Stegobium paniceum*), the carpet beetle (*Anthrenus Spp*), including the museum beetle (*Anthrenus museorum),* the small cabinet beetle (*Anthrenus verbasci), (Anthrenus Spp),* including the brown carpet beetle (*Attagenus Smirnovi),* the black carpet beetle (*Attagenus unicolor),* the common house borer (*Anobium punctatum),* the rice weevil (*Sitophilus oryzae),* the longheaded flour beetle (*Latheticus oryzae),* sthe old house borer *(Hylotrupes bajulu),* the confused flour beetle *(Tribolium confusum, Tribolium castaneum),* the sawtoothed grain *beetle(Oryzaephilus surinamensis),* the larder beetle *(Dermestes lardarius),* the cigarette beetle *(Lasioderma serricorne)* and a number of other diurnal insects, such as the housefly (*Musca domestica)* the European blowfly (*Calliphora viccina).*

The invention uses the phenomenon of causing phosphorescent materials to emit light to attract insects. The light is emitted as a result of illuminating the phosphorescent material by means of a special device emitting light with a properly chosen wavelength. The source of visible light may be a LED diode or another light source. It is powered by means of an energy collector, preferably a battery, whereby the power supply is controlled by a properly programmed electronic circuit. Phosphorescent material is placed inside the adhesive trap allowing to capture insects attracted by the adhesive insert (flypaper) and trapped thereon. Such phosphorescent material emitting light with a spectrum having a peak for a wavelength of 530 nm may be e.g. strontium aluminate mixed with europium and dysprosium.

One advantage of the monitoring trap according to the present invention is that it may be used in places without access to daylight and that it does not require a permanent power supply, as it is equipped with an autonomous electrical power source. It is then capable of operating in places where electricity is cut off for safety reasons, e.g. during the night.

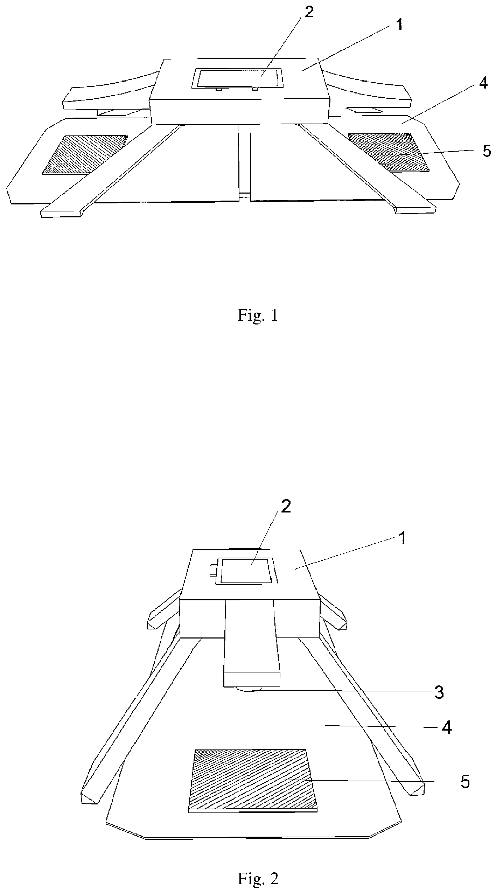

The following drawing presents an embodiment of the present invention where fig. 1 presents a perspective side view of the trap, fig. 2 presents a perspective top and front view of the trap.

The trap is comprised of two parts. The first part is a housing 1 made of a non-combustible plastic, having therein an electronic circuit equipped with an energy collector 2 (optimally batteries) and containing a light source 3. The other part of the trap is a base comprising a replaceable adhesive insert 4 having a surface covered with a phosphorescent material 5. The phosphorescent material emitting light with a spectrum having a peak for a wavelength of 510-530 nm is strontium aluminate mixed with europium and disprosium. Both parts: the housing and the base, are integral components of the trap, where in the presented embodiment, they are constructionally and structurally independent. The electronic circuit is equipped with a light sensor (not shown) controlling its operation. The trap may also comprise a temperature sensor, which disconnects the power supply when the circuit exceeds the safe temperature level.

The trap commences operation with a low light level by means of the light source powered by the collector 2 being switched on by the sensor which controls it. Upon actuation, the electronic circuit begins to illuminate the phosphorescent material 5 from the light source 3. After a strictly determined exposure time needed to arrive at the effect of the entire surface of the phosphorescent material being illuminated, the light source 3 switches off to switch back on after a certain, strictly determined time. The effect of the entire surface of the phosphorescent material being illuminated is crucial for the proper operation of the trap, as it attracts insects to the trap and its adhesive surface. The adhesive surface is arranged such that it is visible to insects at all times, also after they land near the trap. It has been observed that approximately 90% of insects attracted by the light emitted by the phosphorescent material land not on the adhesive surface on which the phosphorescent material is placed, but in its immediate vicinity. After landing, insects must still be able to see the illuminated material at the surface level. If the light were not emitted by the entire surface of the material, especially by its edges, or if the phosphorescent material were placed above the surface of the substrate, the trap would be useless, as following landing, most insects wouldn't be able to see the illuminated material in the expected location and would fly away.

The trap is highly effective in capturing the following beetle species: the bread beetle (*Stegobium paniceum),* the carpet beetle (*Anthrenus Spp),* including the museum beetle (*Anthrenus museorum),* the small cabinet beetle (*Anthrenus verbasci),* (*Anthrenus Spp),* including the brown carpet beetle (*Attagenus Smirnovi),* the black carpet beetle *(Attagenus unicolor),* the common house borer (*Anobium punctatum),* the rice weevil (*Sitophilus oryzae),* the longheaded flour beetle (*Latheticus oryzae),* sthe old house borer *(Hylotrupes bajulu),* the confused flour beetle *(Tribolium confusum, Tribolium castaneum),* the sawtoothed grain beetle*(Oryzaephilus surinamensis),* the larder beetle *(Dermestes lardarius),* the cigarette beetle *(Lasioderma serricorne)* and a number of other diurnal insects, such as the housefly (*Musca domestica)* the European blowfly (*Calliphora viccina).*

## Claims

1. An insect monitoring trap comprising a housing (1) containing therein an energy collector (2) powering a light source (3) and a base including an adhesive insert (4) having a surface covered with a phosphorescent material (5) which upon excitation emits green light with a wavelength peak ranging between 510 and 530 nm, wherein the light from the light source (3) is emitted in the direction towards the phosphorescent material to excite it.

2. The trap according to claim 1, **characterized in that** the phosphorescent material (5) emits green light with a peak at a wavelength of 520 nm.

3. The trap according to claim 1 or 2, **characterized in that** the phosphorescent material (5) is illuminated by the light source in an intermittent manner controlled by a suitably programmed electronic system.

4. The trap according to claims 1-3, **characterized in that** when fully excited, the phosphorescent material is capable of emitting light for over 24 hours.

5. The trap according to claims 1-4, **characterized in that** it is equipped with a light sensor to switch off the light source when the trap is in a place illuminated by an external light.

6. The trap according to claims 1-5, **characterized in that** it is provided with a temperature sensor which disconnects the power supply when the system exceeds the assumed safe temperature level.

7. The trap according to claims 1-6, **characterized in that** the adhesive insert is replaceable.

8. The trap according to claims 1-7, **characterized in that** the phosphorescent material emitting light with a spectrum having a peak at wavelength of 510-530 nm is strontium aluminate mixed with europium and disprosium.

9. The trap according to claims 1-8 for capturing the following beetle species: the bread beetle (*Stegobium paniceum),* the carpet beetle (*Anthrenus Spp),* including the museum beetle (*Anthrenus museorum),* the small cabinet beetle *(Anthrenus verbasci), (Anthrenus Spp),* including the brown carpet beetle *(Attagenus Smirnovi),* the black carpet beetle *(Attagenus unicolor),* the common house borer *(Anobium punctatum),* the rice weevil *(Sitophilus oryzae),* the longheaded flour beetle *(Latheticus oryzae),* the old house borer *(Hylotrupes bajulu),* the confused flour beetle *(Tribolium confusum, Tribolium castaneum),* the sawtoothed grain beetle *(Oryzaephilus surinamensis),* the larder beetle *(Dermestes lardarius),* the cigarette beetle *(Lasioderma serricorne)* and a number of other diurnal insects, such as the housefly *(Musca domestica)* and the European blowfly *(Calliphora viccina).*
